# EUROPEAN PATENT APPLICATION

(11) **EP 2 650 785 A1**
(43) Date of publication of application: **16.10.2013**
(21) Application number: 12163590.8
(22) Date of filing: 10.04.2012
(51) Int. Cl.: G06F 9/45

(54) **Method, system, and computer program product for transforming machine code to source code**

(71) Applicant: Siemens Aktiengesellschaft, 80333 München (DE)
(72) Inventor: Antony, Elvis, 560030 Bangalore (IN); Leelavathy, Grace, 635126 Hosur (IN); Thakur, Prashant, 110034 Delhi (IN)

(57) **Abstract**

The present invention provides a method, a system and a computer program product for transforming machine code (C1) in binary format to source code (C5) in high-level programming language. The high-level programming language grammar (G1) is represented in an abstract syntax tree (G2). The machine code (C1) is disassembled to an intermediate code (C2, C3). The intermediate code (C2, C3) is transformed to an extensible mark-up language code (C4), which in turn, is converted to source code (C5) based on the abstract syntax tree (G2).

## Description

The present invention is related to computer programming. In particular, the present invention is related to a method, a system, and a computer program product for transforming machine code in binary format to source code in a high-level programming language.

Computer programming forms an integral part of industrial automation systems, and provides the basis for designing, implementing, and monitoring control systems used therein. Programmable logic controllers are special computing devices that are commonly used for synchronizing the flow of inputs from sensors with the flow of outputs to actuators based on a programming logic deployed on the programmable logic controllers.

As a common practice, the programming logic is written in a so-called 'high-level' programming languages, such as FBD (Function Block Diagram), LD (Ladder Diagram), ST (Structured Text), IL (Instruction List) and SFC (Sequential Function Chart). The programming logic written in a high-level programming language is referred to as the source-code. Owning to their similarity to natural languages, the high-level programming languages facilitate coding and debugging the source code. The source code is typically compiled to an intermediate representation such as an assembly code, which is then, compiled to a machine (binary) code. The machine code in binary format forms an executable, which is executed by a computing device.

With technological progress in various allied fields, such as industrial devices and processes, it is necessary to redesign and re-engineer the programming logic deployed on the automation devices. Towards this end, the source code is reengineered and recompiled. However, the task of redesigning and re-engineering the programming logic becomes highly infeasible in case original source code is not available. In such situations, it becomes mandatory to recover the source code from the machine code. Similarly, the task of routine maintenance is also dependent on availability of the source code, and becomes extremely difficult in absence thereof.

Although some techniques for transforming the machine code to the source code exist in the prior art, these techniques suffer from various drawbacks. First and foremost limitation of the prior art techniques is that they are based on proprietary intermediate representations of the machine code, which brings in additional complexity and further, such techniques are designed for specific high-level language and hence, are not re-targetable to another high-level programming language. Moreover, such techniques are capable of transforming the machine code to a source code only in the high-level programming language corresponding to the original source code. Hence, the prior art techniques fail to provide a solution in case transformation of the machine code to a source code in a different high-level language is required.

In light of the foregoing, there is a need for a method and a system for transforming machine code in binary format to source code in any high-level programming language as desired.

Accordingly, an object of the present invention is to provide a method, a system, and a computer program product for transforming machine code in binary format to source code in a high-level programming language.

The object of the present invention is achieved by a method, a system, and a computer program product according to claims 1, 7, and 11 respectively. Further embodiments of the present invention are addressed in the dependent claims.

In accordance with the foregoing object of the present invention, a method, a system, and a computer program product for transforming machine code in binary format to source code in a high-level programming language is provided.

In accordance with the method, the system, and the computer program product of the present invention, grammar of the high-level programming language is represented in an abstract syntax tree. The machine code is disassembled to an intermediate code such that the intermediate code is demarcated into a plurality of code blocks. Subsequently, the intermediate code is transformed to an extensible mark-up language code such that each code block in the intermediate code corresponds to an element in the extensible mark-up language code. Finally, each element in the extensible mark-up language code is converted to one or more source code statements based on the abstract syntax tree.

Thus, the present invention provides a simple and robust technique for transforming a machine code in binary format to a source code in a desired high-level programming language. The approach of the present invention is such that any desired source code in any desired high-level programming language may be created. Hence, the present invention is versatile and is not limited to any specific high-level programming language. More importantly, the present invention does not depend on any proprietary intermediate representations, and hence, is easily implementable.

In accordance with an embodiment of the present invention, the grammar of the high-level programming language is represented in an abstract syntax tree through two sub-steps. First, a lexer including a set of lexical rules for creating a set of tokens is generated. Subsequently, a parser including a set of production rules corresponding to the high-level programming language for creating the abstract syntax tree is generated. According to these technical features, various syntactical rules of the high-level programming language are stipulated such that the resulting abstract syntax tree embodies all valid syntactical constructs.

In accordance with another embodiment of the present invention, one or more identifiers and corresponding context information is extracted from the intermediate code. According to this technical feature, the context information includes variable offset, variable length, variable type, one or more function calls, one or more function-call parameters, code block initialization, code block exit, and the like. These technical features ensure that sufficient information is available for efficient block demarcation and merging, and also, conversion of extensible mark-up language code elements to high-level programming language code statements.

In accordance with another embodiment of the present invention, the intermediate code is demarcated into a plurality of code blocks based on the one or more identifiers and the corresponding context information extracted from the intermediate code. This technical feature provides the basis for transforming the intermediate code to extensible mark-up language code.

In accordance with another embodiment of the present invention, two or more code blocks are merged based on the one or more identifiers and the corresponding context information extracted from the intermediate code. This technical feature ensures that two or more code blocks that are performing a single logical operation using only temporary memory are merged such that the resulting source code in high-level programming language is optimized.

In accordance with another embodiment of the present invention, each element in the extensible mark-up language code is converted to the one or more source code statements based on the one or more identifiers and the corresponding context information extracted from the intermediate code in combination with the abstract syntax tree. This technical feature facilitates improved accuracy in the resulting source code in high-level programming language.

The present invention is further described hereinafter with reference to illustrated embodiments shown in the accompanying drawings, in which:
- FIG 1: illustrates a flow-chart depicting a method for transforming machine code in binary format to source code in a high-level programming language in accordance with an embodiment of the present invention,
- FIG 2: illustrates a flow-chart depicting a method for representing grammar of the high-level programming language in an abstract syntax tree in accordance with an embodiment of the present invention,
- FIGS 3A-3E: illustrate a pseudo-code for a lexer and a parser in accordance with an exemplary embodiment of the present invention,
- FIGS 4A-4B: illustrate a schematic diagram depicting generation of the abstract syntax tree in accordance with an exemplary embodiment of the present invention,
- FIG 5: illustrates a flow-chart depicting a method for transforming machine code in binary format to source code in a high-level programming language in accordance with an alternative embodiment of the present invention,
- FIG 6: illustrates a block diagram of a system for transforming a machine code in binary format to a source code in a high-level programming language in accordance with an embodiment of the present invention.
- FIG 7: illustrates an exemplary code in high-level programming language forming part of an original source code in accordance with an exemplary embodiment of the present invention,
- FIG 8: illustrates an exemplary code in intermediate language in accordance with an exemplary embodiment of the present invention,
- FIGS 9A-9D: illustrate exemplary information tables including identifier and context information in accordance with an exemplary embodiment of the present invention,
- FIGS 10A-10B: illustrate exemplary code blocks formed owing to demarcating code blocks in the intermediate code in accordance with an exemplary embodiment of the present invention,
- FIGS 11A-11B: illustrate exemplary code blocks formed owing to merging selected code blocks in the intermediate code in accordance with an exemplary embodiment of the present invention,
- FIGS 12A-12C: illustrate exemplary extensible mark-up language code generated owing to transforming the intermediate code in accordance with an exemplary embodiment of the present invention,
- FIGS 13A-13B: illustrate exemplary source code generated owing to converting each element in the extensible mark-up language code to one or more source code statements in high-level programming language in accordance with an exemplary embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

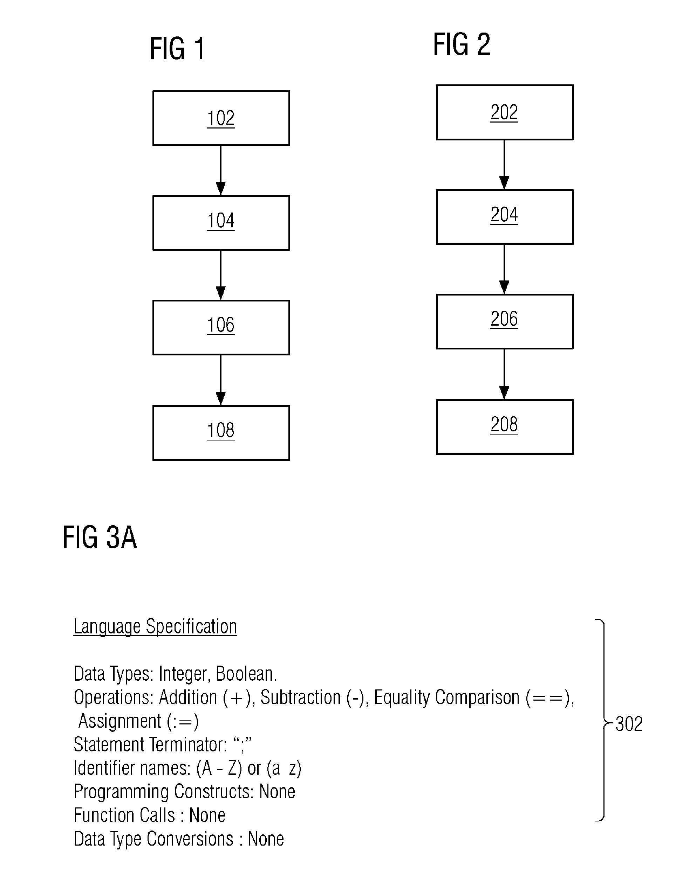

FIG 1 illustrates a flow-chart depicting a method for transforming machine code in binary format to source code in a high-level programming language in accordance with an embodiment of the present invention.

At step 102, grammar of the high-level programming language is represented in an abstract syntax tree. First, a language specification of the high-level programming language is provided, and subsequently, a lexer including a set of lexical rules and a parser including one or more production rules are generated. Through a suitable operation of the lexer and the parser, the abstract syntax tree embodying all valid syntactical constructs is generated. Various technical aspects associated with generation of the abstract syntax tree will further be explained in conjunction with FIGS 2 through 4.

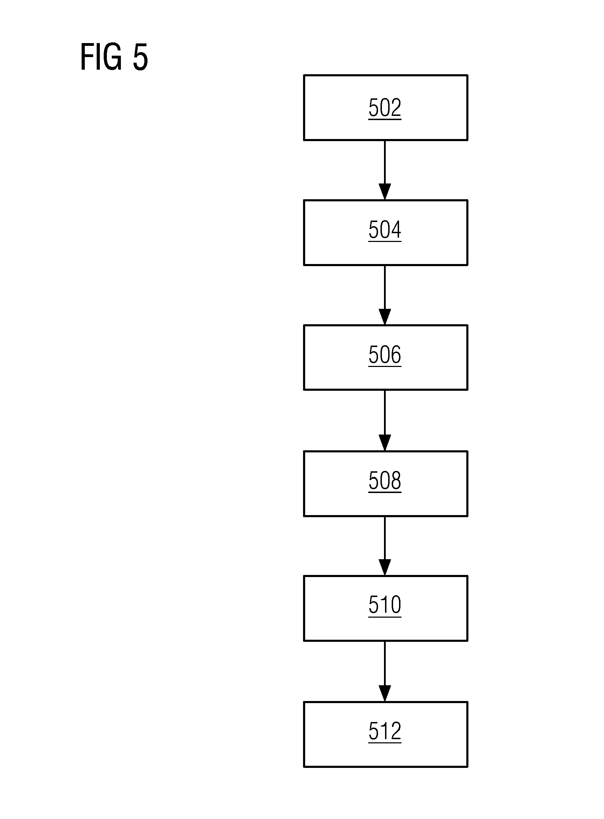

At step 104, the machine code is disassembled to an intermediate code. At this step, the intermediate code is further demarcated into a plurality of code blocks (as will be explained in more detail in FIG 5).

At step 106, the intermediate code is transformed to an extensible mark-up language code such that each code block in the intermediate code corresponds to an element in the extensible mark-up language code.

Finally, at step 108, each element in the extensible mark-up language code is converted to one or more source code statements based on the abstract syntax tree.

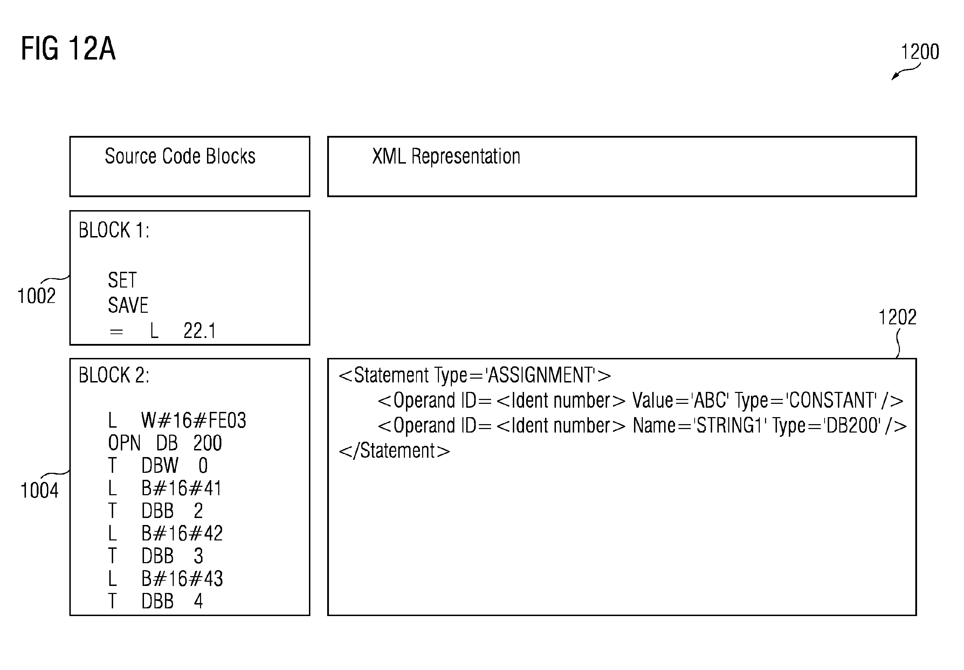

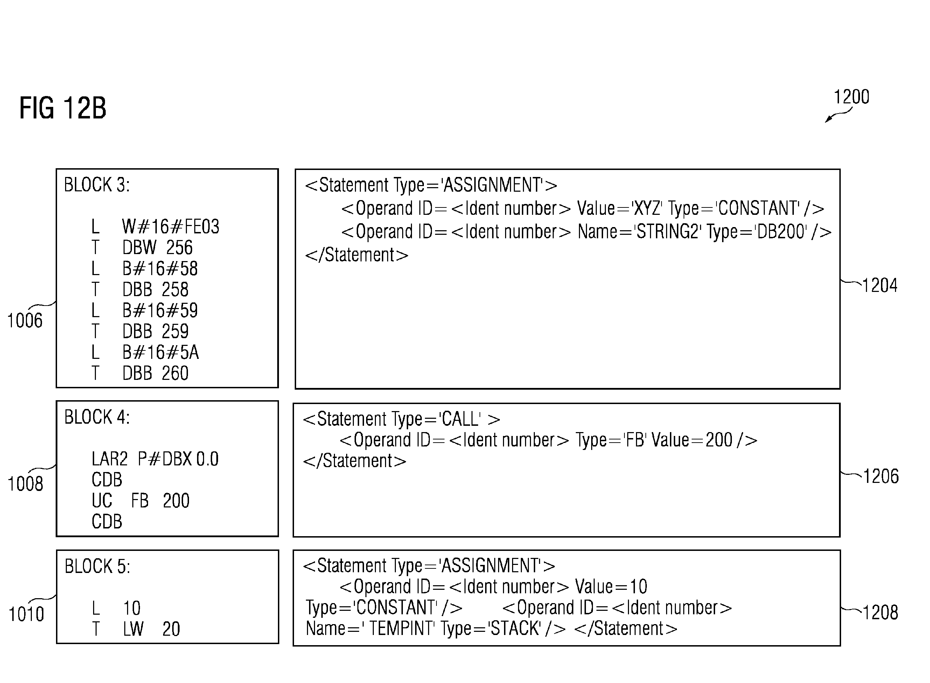

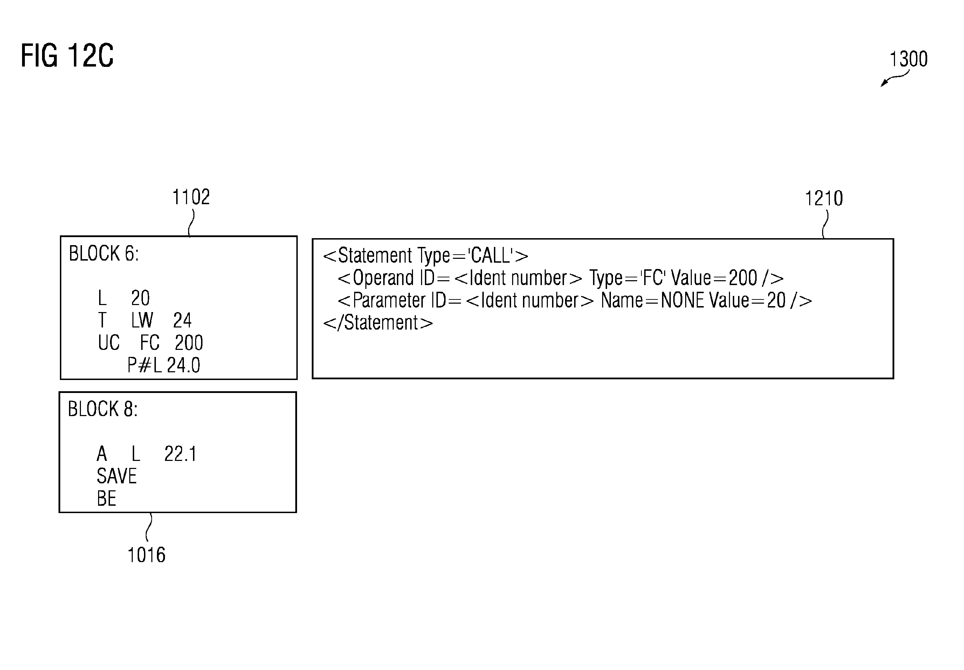

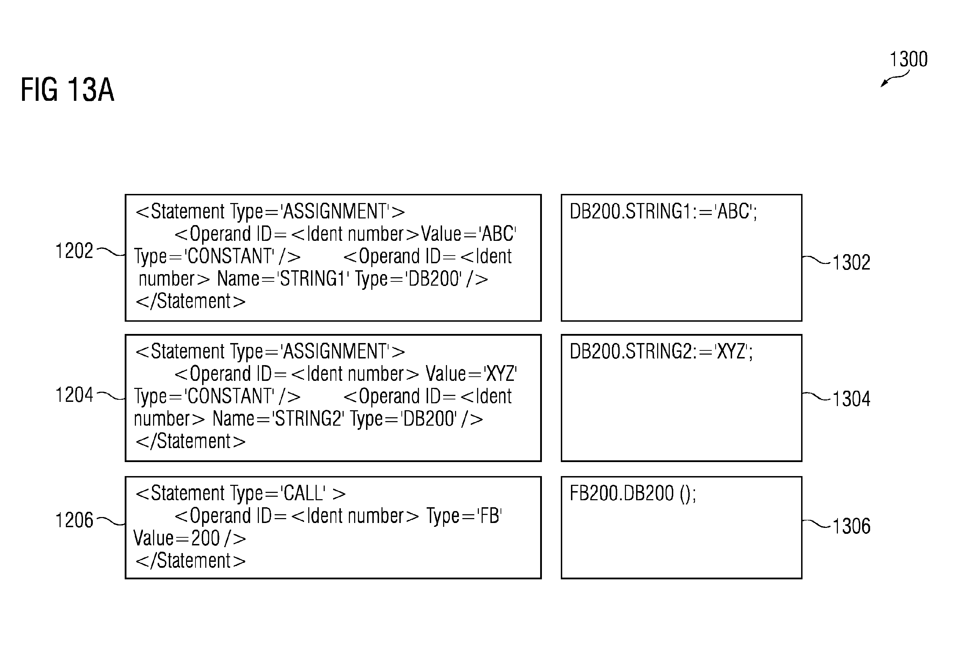

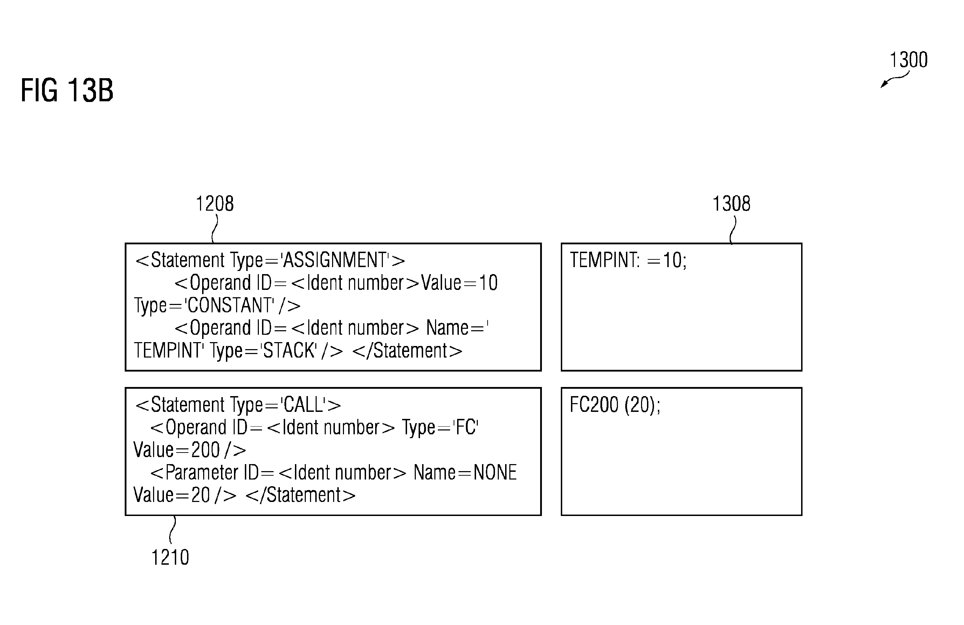

The steps 106 and 108 will be more readily understood in conjunction with FIGS 12 and 13.

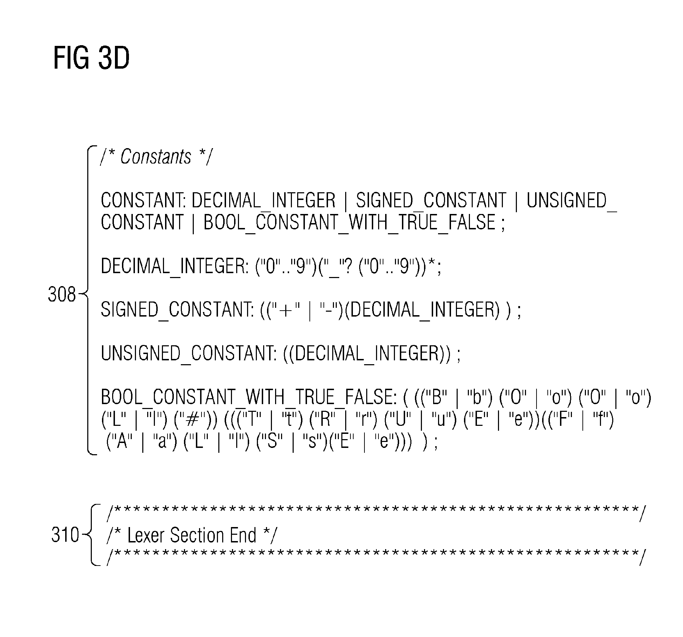

Referring now to FIGS 2 and 3A through 3E, generation of the abstract syntax tree will now be explained. FIG 2 illustrates a flow-chart depicting a method for representing grammar of the high-level programming language in an abstract syntax tree in accordance with an embodiment of the present invention. Further, FIGS 3A through 3E illustrate a pseudo-code for a lexer and a parser in accordance with an exemplary embodiment of the present invention.

At step 202, a language specification of the high-level programming language is provided. Referring to FIG 3A, an exemplary language specification is provided. For the sake of clarity, the high-level programming language, in which the machine code is to be transformed, is assumed to relatively simple. For example, the high-level programming language includes only two data types, namely 'Integer' and 'Boolean'; only five operations, namely, 'Addition', 'Subtraction', 'Equality', 'Comparison', and 'Assignment'; and so on.

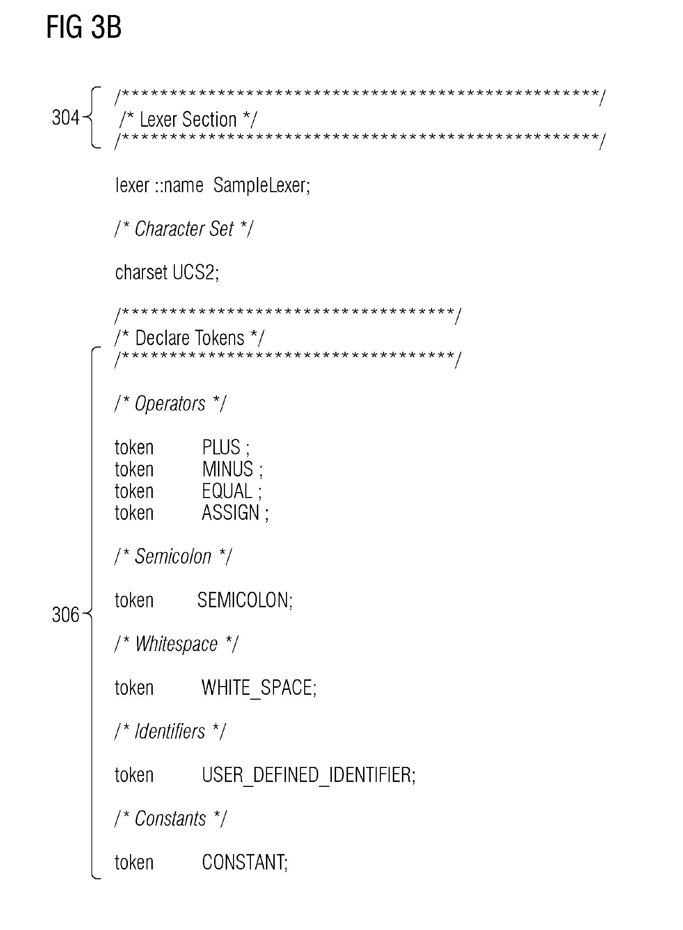

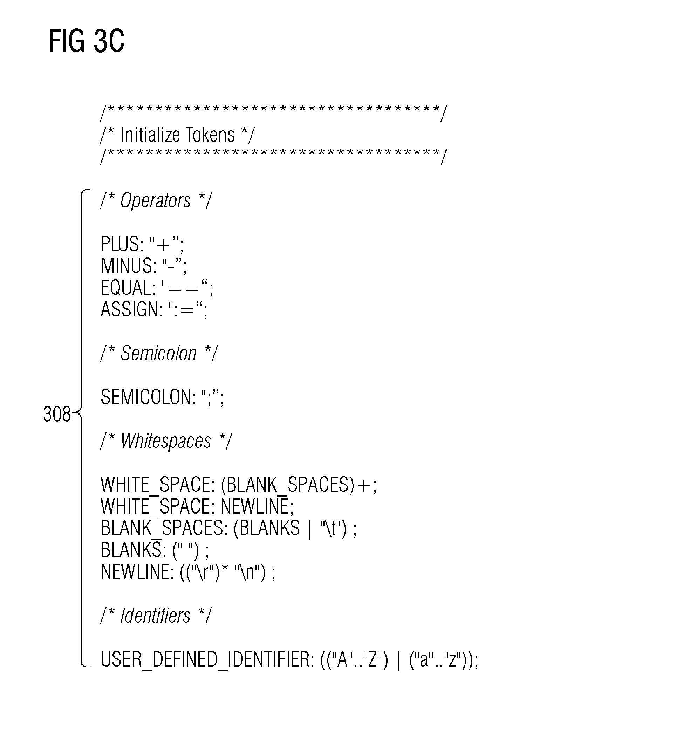

Referring back to FIG 2, at step 204, a lexer including a set of lexical rules for creating a set of tokens is generated. Referring to FIG 3B through 3D, the lexer begins at 304. In block 306, various tokens such as tokens for operators, semicolon, whitespace, identifiers, and constants are declared. Further, in block 308, these tokens are initialized, as shown in FIG 3C. The lexer ends at 310.

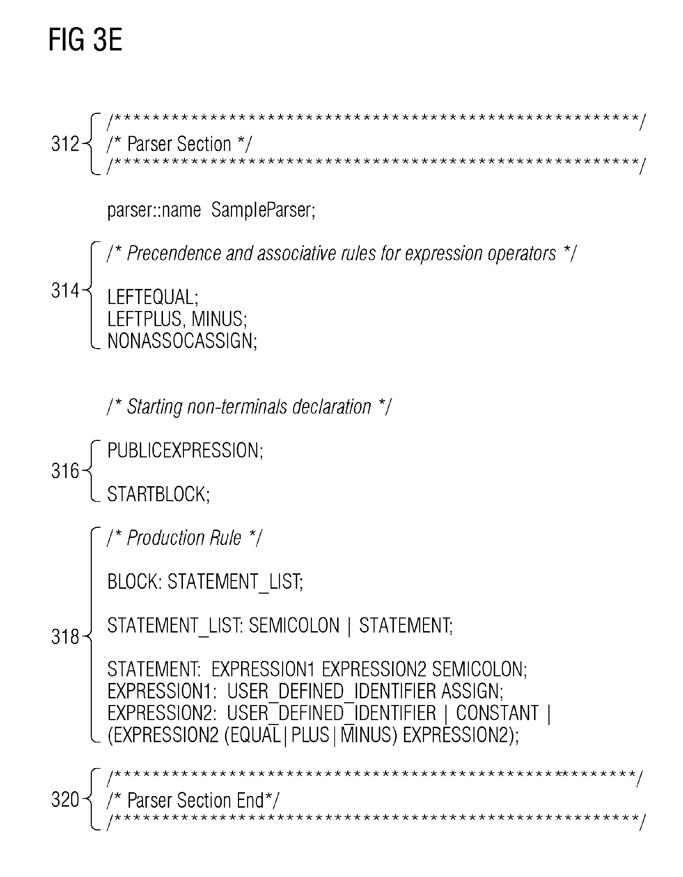

Referring back to FIG 2, at step 206, a parser including one or more production rules is generated. As shown in FIG 3E, the parser begins at 312. In block 314, various precedence and associative rules for operators are defined. In block 316, non-terminals to be used in specifying the production rules are declared. In the exemplary pseudo code shown in the adjoining figure, a 'BLOCK' is defined as a non-terminal that should be processed. In block 318, the set of production rules are specified. For example, in accordance with the pseudo code shown in the adjoining figure, each BLOCK is formed from a STATEMENT_LIST, wherein each STATEMENT_LIST is formed from either a SEMICOLON token or a STATEMENT. The block 318 further defines a STATEMENT as including an EXPRESSION1, EXPRESSION2, and SEMICOLON. EXPRESSION1 has the form of a USER DEFINED IDENTIFIER token followed by an ASSIGN token whereas, EXPRESSION2 is a USER_DEFINED_IDENTIFIER, or a CONSTANT, or another EXPRESSION2. The production rules specified in FIG 3E provides an exhaustive set of syntactical constructs that can be formed in the high-level programming language in this example.

Referring back to FIG 2, at step 208, the abstract syntax tree embodying all valid syntactical constructs is generated. Towards this end, any known lexer/parser generation tools such as ANTLR, Lemon, YACC+, and the like, may be used.

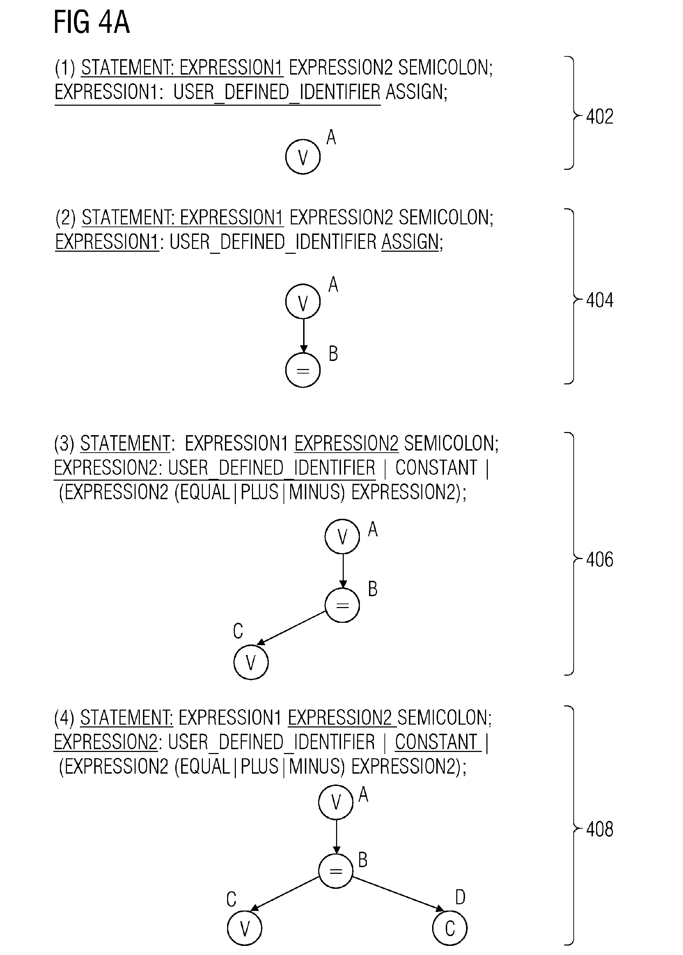

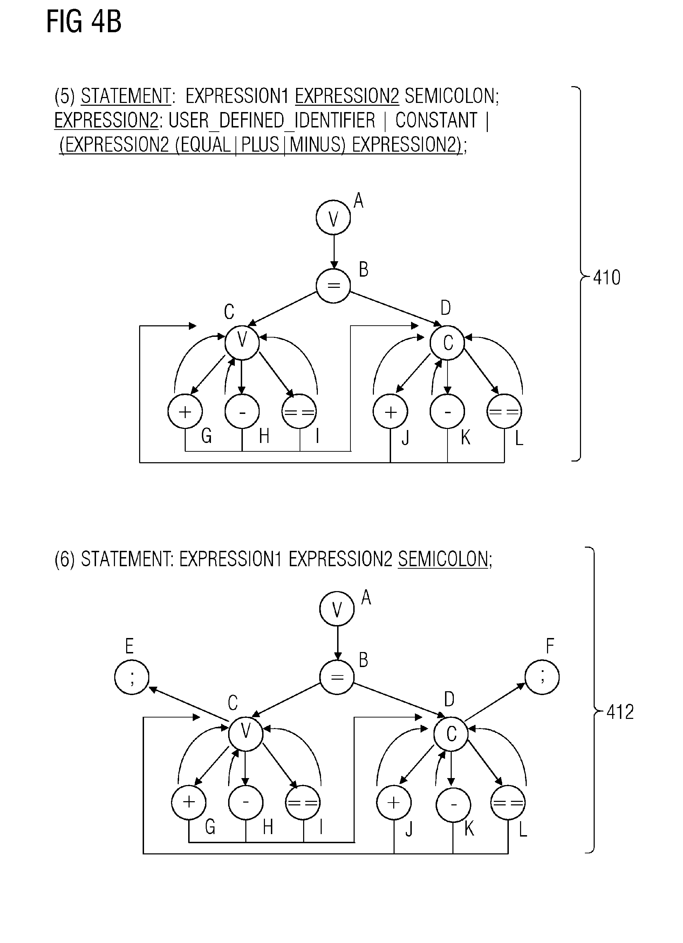

FIGS 4A and 4B illustrate a schematic diagram depicting generation of an abstract syntax tree in a step-by-step manner in accordance with an exemplary embodiment of the present invention.

As illustrated in FIGS 4A and 4B, a statement is parsed. To begin with, the first part 'EXPRESSION1' is parsed. Thus, at step 402, USER_DEFINED_IDENTIFIER is presented as node A. As per the lexer specified earlier, the USER_DEFINED_IDENTIFIER is a variable. Hence, node A is marked as 'V'. At step 404, a node B is formed and connected to node A. The node B represents the second token corresponding to ASSIGN.

As will be noted, the process of generation of the abstract syntax tree is similar to the process of generation of the abstract syntax tree or parse tree while compiling a source code in high-level programming language. However, the essential difference resides in that the abstract syntax tree in accordance with the present invention is generated based on the set of production rules corresponding to high-level programming language instead of actual source code written in the high-level programming language.

Proceeding in a similar manner through steps 406 through 412, the abstract syntax tree is generated. Thus, nodes C through L are formed. Each of these nodes represents one of a variable V, a constant C, and an operation, such as, '+', '-', '=', and so on. As will be noted, all valid syntactical constructs in accordance with the set of production rules are embodied through a suitable path formed in the abstract syntax tree.

FIG 5 illustrates a flow-chart depicting a method for transforming machine code in binary format to source code in a high-level programming language in accordance with an alternative embodiment of the present invention.

The method depicted in FIG 5 is similar to the method depicted in FIG 1. In particular, steps 502, 510, 512 are respectively similar to steps 104, 106, and 108.

Thus, at step 502, the machine code in binary format is disassembled to an intermediate code.

At step 504, one or more identifiers and corresponding context information from the intermediate code is extracted. The context information includes at least one of variable offset, variable length, variable type, one or more function calls, one or more function-call parameters, code block initialization, code block exit, and so on.

At step 506, the intermediate code is demarcated into a plurality of code blocks based on the one or more identifiers and the corresponding context information extracted from the intermediate code at step 504.

At step 508, two or more code blocks are merged based on the one or more identifiers and the corresponding context information extracted from the intermediate code.

At step 510, as in step 106, the intermediate code is transformed to an extensible mark-up language code such that each code block in the intermediate code corresponds to an element in the extensible mark-up language code.

Similarly, at step 512, as in step 108, each element in the extensible mark-up language code is converted to one or more source code statements based on the abstract syntax tree. In an embodiment of the present invention, each element in the extensible mark-up language code is converted to the one or more source code statements based on the one or more identifiers and the corresponding context information extracted from the intermediate code in combination with the abstract syntax tree.

Various examples of high-level programming languages in which the source code may be obtained include, but are not limited to, FBD (Function Block Diagram), LD (Ladder Diagram), ST (Structured Text), and SFC (Sequential Function Chart).

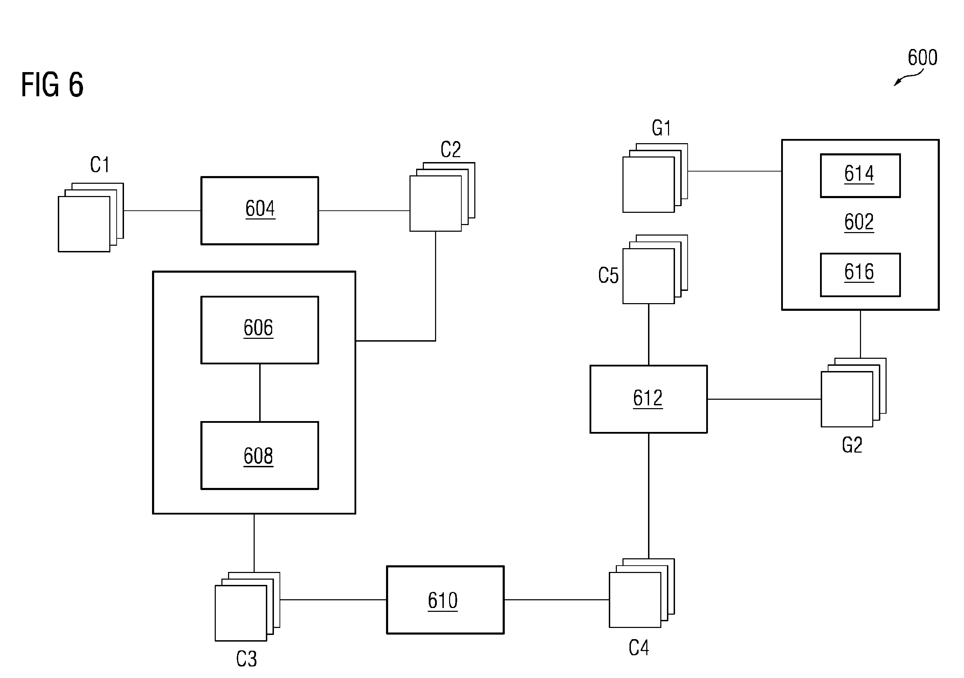

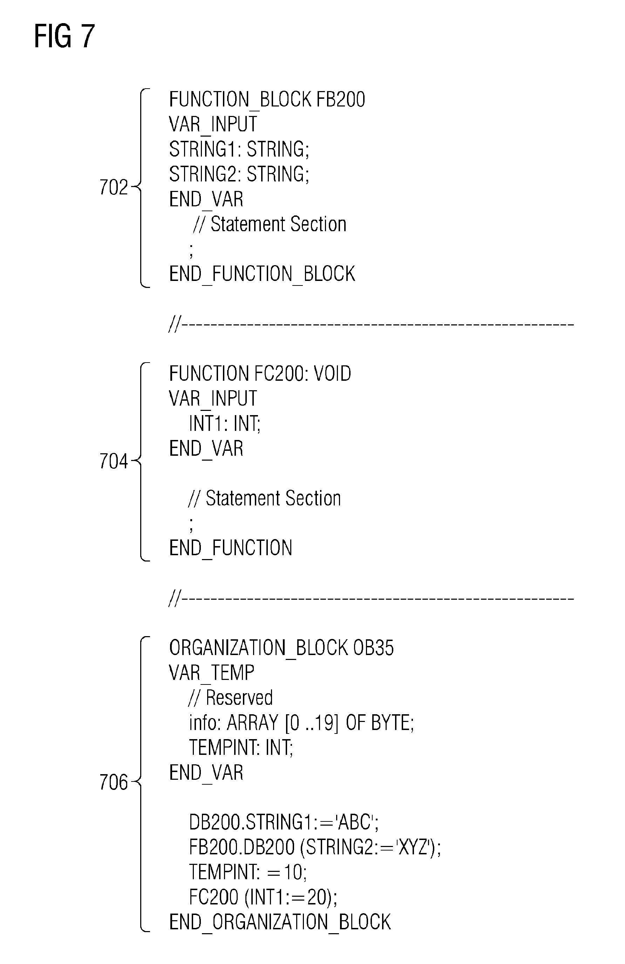

The method of the present invention, as explained in the foregoing figure, will become more readily understood with the help of an example described in conjunction with FIGS 7 through FIG 13. However, the system of the present invention will first be described in conjunction with FIG 6.

FIG 6 illustrates a schematic diagram depicting a system 600 for transforming a machine code in binary format to a source code in a high-level programming language in accordance with an embodiment of the present invention.

The system 600 includes an abstract-syntax-tree module 602, a disassembling module 604, an extraction module 606, a demarcating-and-merging module 608, a transformation module 610, and a conversion module 612. The abstract-syntax-tree module 602 includes a lexer module 614 and a parser module 616.

The abstract-syntax-tree module 602 is provided a language specification G1. The lexer module 614 includes a set of lexical rules for creating a set of tokens. Further, the parser module 616 includes a set of production rules corresponding to the high-level programming language for creating an abstract syntax tree G2. Thus, the abstract-syntax-tree module 602 receives the language specification G1 and produces abstract syntax tree G2, which is provided to the conversion module 612.

The disassembling module 604 disassembles the machine code C1 to an intermediate code C2. The intermediate code C2 is provided to extraction module 606 and demarcating-and-merging module 608.

The extraction module 606 extracts one or more identifiers and corresponding context information from the intermediate code C2. The context information includes variable offset, variable length, variable type, one or more function calls, one or more function-call parameters, code block initialization, code block exit, and so on.

The demarcating-and-merging module 608 demarcates the intermediate code C2 into a set of code blocks based on the one or more identifiers and the corresponding context information received from extraction module 606. Further, the demarcating-and-merging module 608 merges two or more code blocks based on the one or more identifiers and the corresponding context information. Thus, the intermediate code C3 is generated. The intermediate code C3 is provided to the transformation module 610.

The transformation module 610 transforms the intermediate code C3 to an extensible mark-up language code C4. Each code block in the intermediate code C3 is respectively transformed to an element in the extensible mark-up language code C4. The extensible mark-up language code C4 is provided to the conversion module 612.

The conversion module 612 converts each element in the extensible mark-up language code C4 to one or more source code statements based on the abstract syntax tree G2 to generate the source code C5 in high-level programming language. In accordance with another embodiment of the present invention, the conversion module 612 converts each element in the extensible mark-up language code C4 to the one or more source code statements based on the one or more identifiers and the corresponding context information extracted from the intermediate code in combination with the abstract syntax tree G2.

As will be readily apparent, the present invention facilitates conversion of a given machine code in binary format to any suitable high-level programming language. It is only required to provide an appropriate G1 based on the desired high-level programming language.

FIG 7 illustrates an exemplary code in high-level programming language forming part of an original source code in accordance with an exemplary embodiment of the present invention.

The exemplary code shown in FIG 7, lists three blocks 702 through 706. Each block defines a program construct in accordance with the syntactical rules of a high-level programming language corresponding to the original source code. In the example shown, the each block defines a function. For example, block 702 defines function FB602, block 704 defines function FC200, and block 706 defines function OB35.

It is should be noted that the code shown in FIG 7 is the 'original' source code and it is assumed that this original source code is not available. However, the corresponding machine code in binary format is available and the techniques of the present invention will be employed to transform the machine code in binary format to a source code in a high-level programming language. The high-level programming language corresponding to thus 'retrieved' source code may be same as that corresponding to the 'original' source code or another high-level programming language, as may be required.

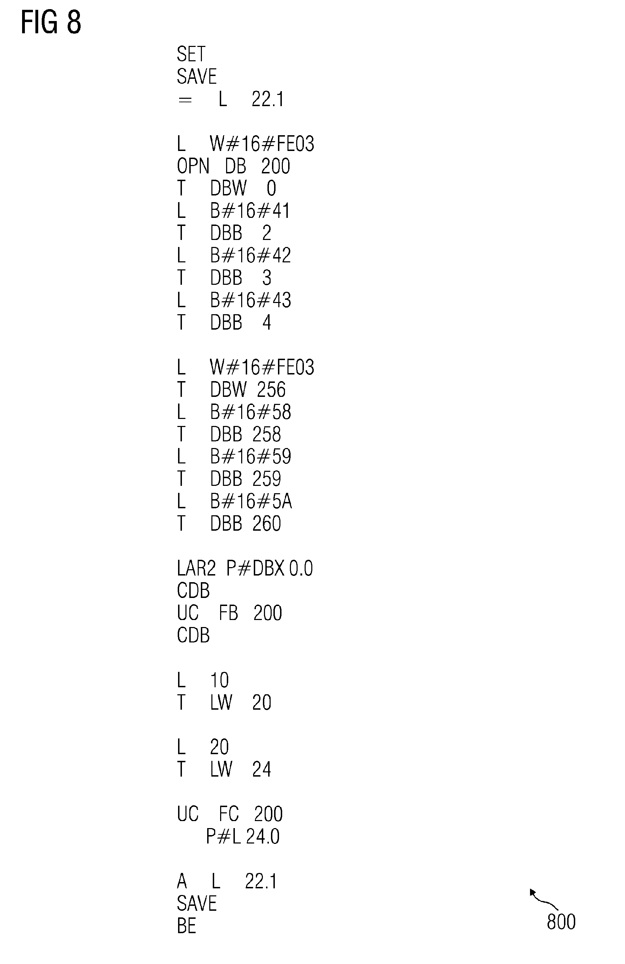

FIG 8 illustrates an exemplary intermediate code 800 in accordance with an exemplary embodiment of the present invention.

As has been explained in conjunction with the foregoing description, the first step of the present invention is to disassemble the machine code in binary format to an intermediate code. In the context of industrial automation, the intermediate code may be in Instruction List (IL). In other applications, the intermediate code may be any suitable assembly language.

The intermediate code 800 illustrated in FIG 8, is generated by processing the machine code corresponding to function OB35 to generate corresponding intermediate code in Instruction List format. In a similar manner, intermediate code corresponding to remaining portions of the machine code is generated.

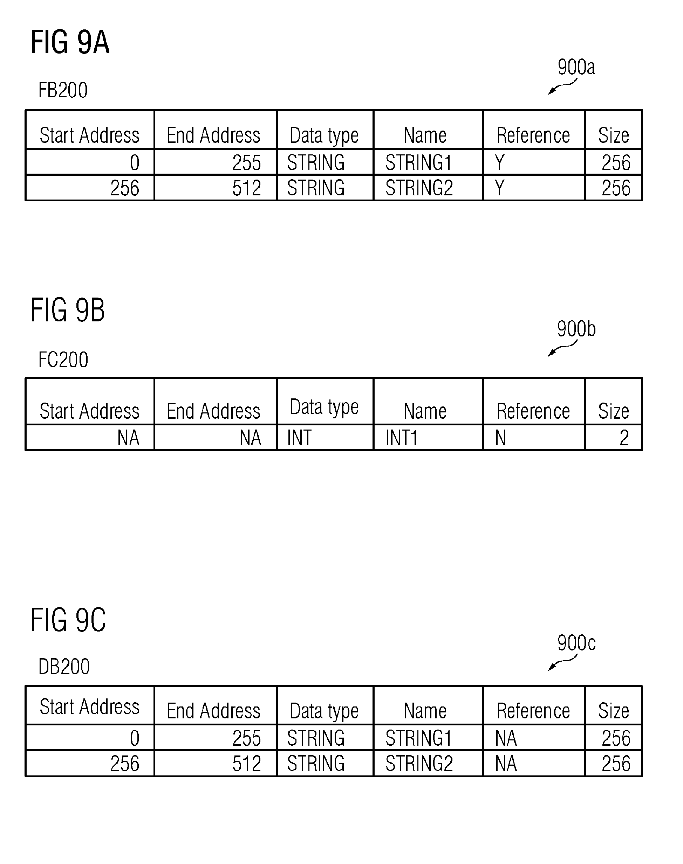

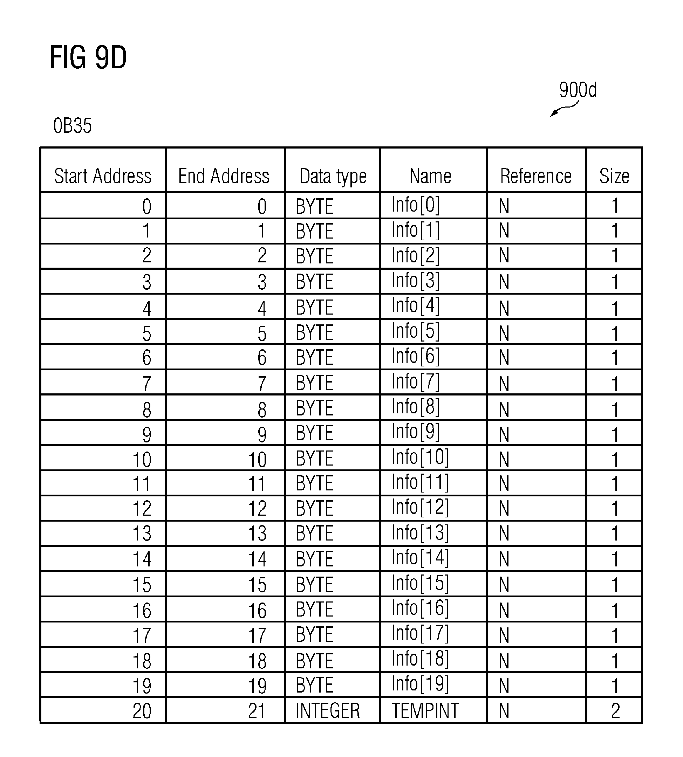

Thereafter, the intermediate code 800 is processed to extract identifier and context information, as depicted in FIG 9.

FIG 9A through 9D illustrate exemplary information tables 900a through 900d including identifier and context information in accordance with an exemplary embodiment of the present invention.

As apparent from the figure, each information table 900 includes a list of identifiers and temporary memory used in various parts of the intermediate code 800. For example, information table 900a, shows identifiers 'STRING1' and 'STRING2' and related context information corresponding to function FB200.

The use of information tables 900 as depicted in adjoining figures is only exemplary in nature. It should be noted that the identifier and the corresponding context information may be represented in any suitable manner.

The intermediate code 800 is subsequently demarcated into a plurality of code blocks, as explained in the following description.

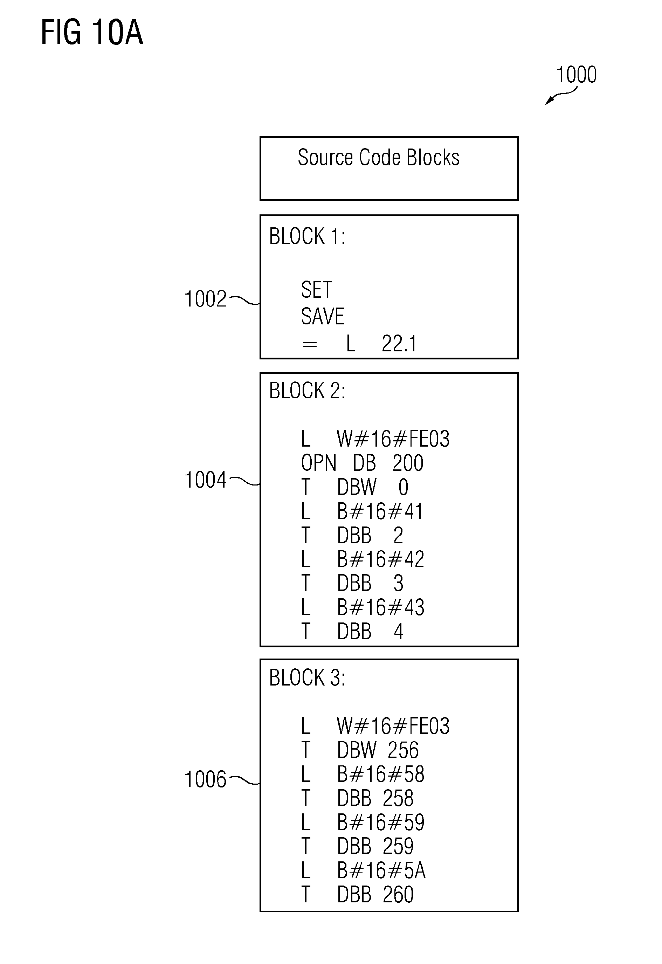

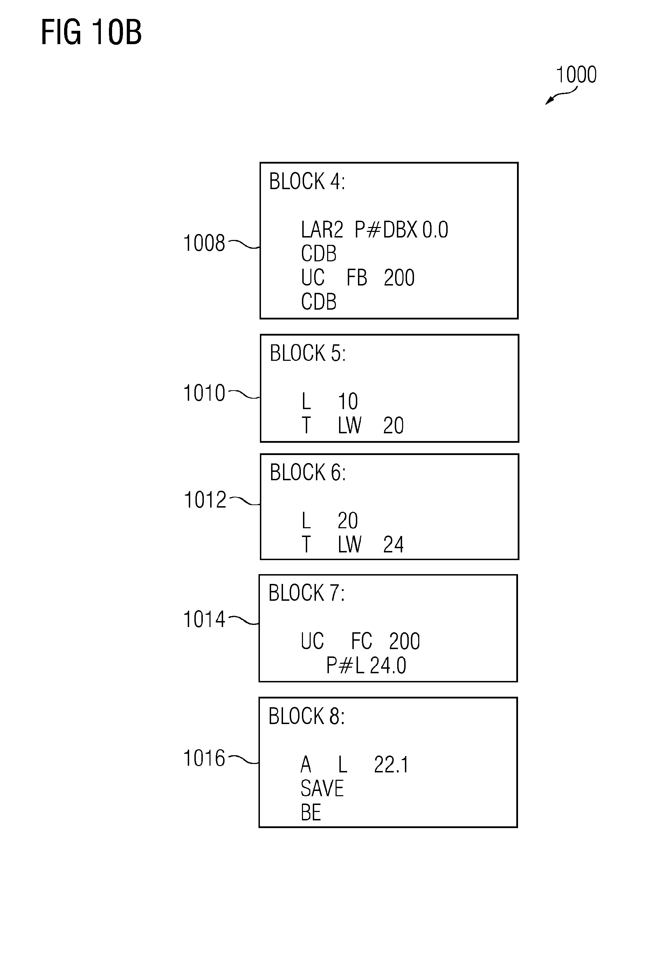

FIGS 10A and 10B illustrate exemplary code blocks 1002 through 1016 formed owing to demarcating code blocks in the intermediate code 800 in accordance with an exemplary embodiment of the present invention.

The intermediate code 800, shown in FIG 8, is demarcated into a plurality of blocks 1002 through 1016.

Block 1004 begins with a load instruction, loading hexadecimal value FE03 (254-03 in decimal system) at offset 0 in data block DB200, which, in this example, refers to the maximum storage length and the actual length of variable STRING1 in data block DB200. The hexadecimal value is followed by three more pairs of load-transfer instructions transferring characters A, B, and C at incremental memory locations relative to offset 0. The identifier associated with offset 0 location in DB200 is initialized as variable 'STRING1'. Thus, the instructions assigning value 'ABC' to identifier 'STRING1' are grouped in block 1004.

Similarly, the remaining intermediate code 800 is also demarcated into individual blocks.

While creating each code block, a block table is also simultaneously formed and information is entered therein. In case any code block refers to a memory location that is not found in the information tables 900a through 900d formed using identifier and context information, as described earlier, the memory location is understood to be a temporary memory and an entry is made in the block table.

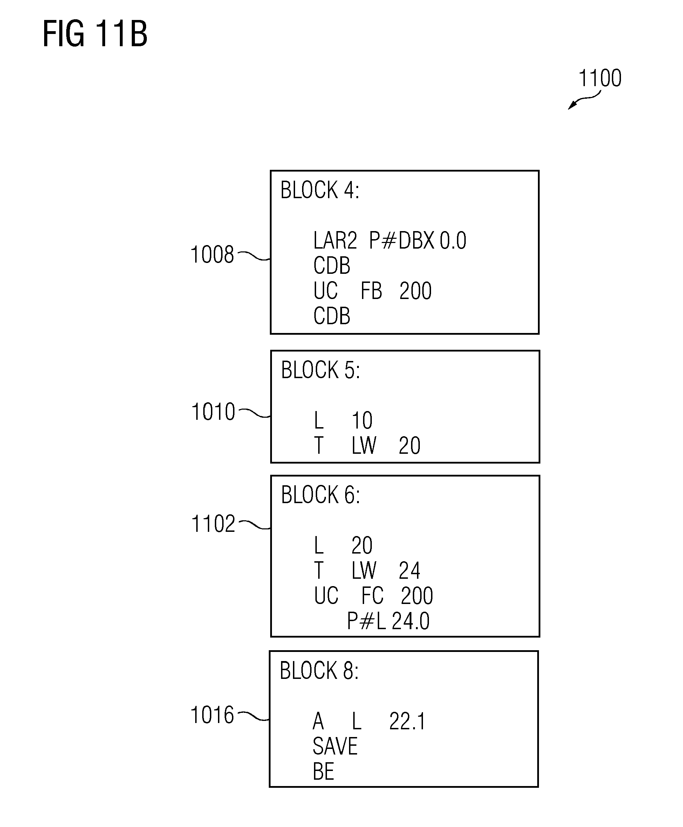

For example, in block 1012, stack location 24 has no reference in information table corresponding to OB35. Hence, an entry is made in a block table. Subsequently, block 1014 reuses stack location 24. Based on this analysis, it is concluded that block 1012 is writing to a given stack location while block 1014 is reading from that stack location. Hence, it is deduced that it is possible to merge blocks 1012 and 1014, as depicted in FIG 11B.

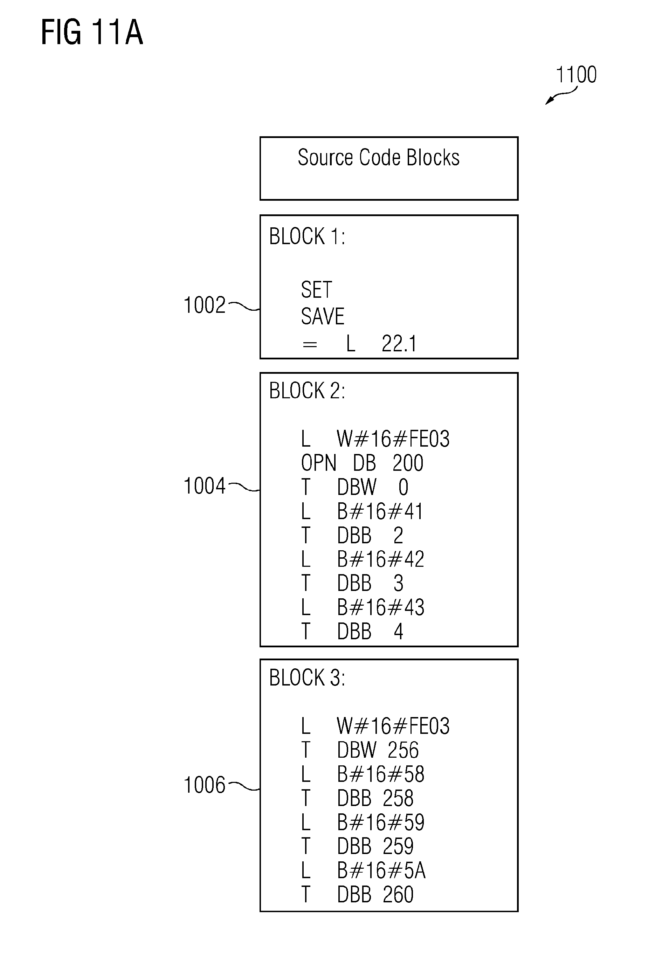

FIGS 11A and 11B illustrate exemplary code blocks formed owing to merging selected code blocks in the intermediate code 1000 in accordance with an exemplary embodiment of the present invention. As will be apparent, blocks 1012 and 1014 have been merged, while the remaining blocks are same as those shown in FIGS 10A and 10B.

FIGS 12A through 12C illustrate exemplary extensible mark-up language code 1202 through 1210 generated owing to transforming the intermediate code 1100 in accordance with an exemplary embodiment of the present invention.

After demarcating and merging the code blocks, as explained in conjunction with FIGS 10A-10B and FIGS 11A-11B, each code block in the intermediate code 1100 is transformed into equivalent statement in extensible mark-up language, as depicted in the adjoining figure.

Thus, code blocks 1004 and 1006 are transformed into a statement 1202 and 1204 respectively, each with a tag value ASSIGNMENT; similarly, code block 1008 is transformed into a statement 1206 with tag value CALL; and so on.

FIGS 13A and 13B illustrate exemplary source code generated owing to converting each element in the extensible mark-up language code 1200 to one or more source code statements in high-level programming language in accordance with an exemplary embodiment of the present invention.

As mentioned earlier, the extensible mark-up language code 1200 is converted to high-level programming language code. In order to do so, each statement 1202 through 1210 is analyzed in conjunction with the abstract syntax tree representing grammar of the high-level programming language and a suitable high-level programming language code is generated, as depicted in the adjoining figure.

The present invention, as described herein, provides a simple and robust technique for transforming a machine code in binary format to a source code in a desired high-level programming language. The approach of the present invention is such that any desired source code in any desired high-level programming language may be created. Hence, the present invention is versatile and is not limited to any specific high-level programming language.

In general the present invention is applicable for any machine code. However, the present invention is particularly advantageous in the context of industrial automation, where machine code in the form of downloadable binaries are deployed on the programmable logic controllers, and very often the original source code in high-level programming language is not available. Further, in the context of industrial automation, the need to re-engineer the program logic arises very frequently due to ever evolving technologies with regard to the hardware such as sensors and actuators.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some implementations, the data processing system is implemented using GPUs, FPGAs and ASICs.

While the present invention has been described in detail with reference to certain embodiments, it should be appreciated that the present invention is not limited to those embodiments. In view of the present disclosure, many modifications and variations would present themselves, to those of skill in the art without departing from the scope and spirit of this invention. The scope of the present invention is, therefore, indicated by the following claims rather than by the foregoing description. All changes, modifications, and variations coming within the meaning and range of equivalency of the claims are to be considered within their scope.

## Claims

1. A method for transforming a machine code in binary format to a source code in a high-level programming language, the method comprising:
- representing (102) grammar of the high-level programming language in an abstract syntax tree,
- disassembling (104) the machine code to an intermediate code such that the intermediate code is demarcated into a plurality of code blocks,
- transforming (106) the intermediate code to an extensible mark-up language code such that each code block in the intermediate code corresponds to an element in the extensible mark-up language code, and
- converting (108) each element in the extensible mark-up language code to one or more source code statements based on the abstract syntax tree.

2. The method according to claim 1, wherein representing grammar of the high-level programming language in an abstract syntax tree comprises:
- generating (204) a lexer comprising a set of lexical rules for creating a set of tokens, and
- generating (206) a parser comprising a set of production rules corresponding to the high-level programming language for creating the abstract syntax tree.

3. The method according to claim 1 further comprising extracting (504) one or more identifiers and corresponding context information from the intermediate code, wherein the context information comprises at least one of variable offset, variable length, variable type, one or more function calls, one or more function-call parameters, code block initialization, and code block exit.

4. The method according to claim 3 further comprising demarcating (506) the intermediate code into a plurality of code blocks based on the one or more identifiers and the corresponding context information extracted from the intermediate code.

5. The method according to claim 4 further comprising merging (508) two or more code blocks based on the one or more identifiers and the corresponding context information extracted from the intermediate code.

6. The method according to claim 3, wherein each element in the extensible mark-up language code is converted to the one or more source code statements based on the one or more identifiers and the corresponding context information extracted from the intermediate code in combination with the abstract syntax tree.

7. A system (600) for transforming a machine code (C1) in binary format to a source code (C5) in a high-level programming language, the system (600) comprising:
- an abstract-syntax-tree module (602) for representing grammar (G1) of the high-level programming language in an abstract syntax tree (G2),
- a disassembling module (604) for disassembling the machine code (C1) to an intermediate code (C3) such that the intermediate code is demarcated into a plurality of code blocks,
- a transformation module (610) for transforming the intermediate code (C3) to an extensible mark-up language code (C4) such that each code block in the intermediate code (C3) corresponds to an element in the extensible mark-up language code (C4), and
- a conversion module (612) converting each element in the extensible mark-up language code (C4) to one or more source code statements based on the abstract syntax tree (G2).

8. The system (600) according to claim 7, wherein the abstract-syntax-tree module (602) comprises:
- a lexer module (614) comprising a set of lexical rules for creating a set of tokens, and
- a parser module (616) comprising a set of production rules corresponding to the high-level programming language for creating the abstract syntax tree (G2).

9. The system (600) according to claim 7 further comprising:
- an extraction module (606) for extracting one or more identifiers and corresponding context information from the intermediate code (C2), wherein the context information comprises at least one of variable offset, variable length, variable type, one or more function calls, one or more function-call parameters, code block initialization, and code block exit, and
- a demarcating-and-merging module (608) for demarcating the intermediate code (C2) into a set of code blocks based on the one or more identifiers and the corresponding context information extracted from the intermediate code, and merging two or more code blocks based on the one or more identifiers and the corresponding context information.

10. The system (600) according to claim 9, wherein the conversion module (612) converts each element in the extensible mark-up language code (C4) to the one or more source code statements based on the one or more identifiers and the corresponding context information extracted from the intermediate code in combination with the abstract syntax tree (G2).

11. A computer program product embodied on a computer readable medium, the computer-readable medium comprising computer-executable instructions for transforming a machine code to a source code in a high-level programming language, said computer-executable instructions comprising:
- computer-executable instructions for representing (102) grammar of the high-level programming language in an abstract syntax tree,
- computer-executable instructions for disassembling (104) the machine code to an intermediate code such that the intermediate code is demarcated into a plurality of code blocks,
- computer-executable instructions for transforming (106) the intermediate code to an extensible mark-up language code such that each code block in the intermediate code corresponds to an element in the extensible mark-up language code, and
- computer-executable instructions for converting (108) each element in the extensible mark-up language code to one or more source code statements based on the abstract syntax tree.

12. The computer program product according to claim 11,
wherein computer-executable instructions for representing grammar of the high-level programming language in an abstract syntax tree comprises:
- computer-executable instructions for generating (204) a lexer comprising a set of lexical rules for creating a set of tokens, and
- computer-executable instructions for generating (206) a parser comprising a set of production rules corresponding to the high-level programming language for creating the abstract syntax tree.

13. The computer program product according to claim 11 further comprising computer-executable instructions extracting (504) one or more identifiers and corresponding context information from the intermediate code, wherein the context information comprises at least one of variable offset, variable length, variable type, one or more function calls, one or more function-call parameters, code block initialization, and code block exit.

14. The computer program product according to claim 13 further comprising:
- computer-executable instructions for demarcating (506) the intermediate code into a plurality of code blocks based on the one or more identifiers and the corresponding context information extracted from the intermediate code, and
- computer-executable instructions for merging (508) two or more code blocks based on the one or more identifiers and the corresponding context information extracted from the intermediate code.

15. The computer program product according to claim 13,
wherein each element in the extensible mark-up language code is converted to the one or more source code statements based on the one or more identifiers and the corresponding context information extracted from the intermediate code in combination with the abstract syntax tree.
